# EUROPÄISCHE PATENTSCHRIFT

(11) **EP 1 515 129 B1**
(45) Veröffentlichungstag und Bekanntmachung des Hinweises auf die Patenterteilung: **10.08.2005**
(21) Anmeldenummer: 03020101.6
(22) Anmeldetag: 04.09.2003
(51) Int. Cl.: G01M 1/02, G01M 17/02, B60C 11/24, G01B 11/22

(54) **Punktweises optisches Abtasten der Beschaffenheit eines Luftreifens eines Fahrzeugrades (an Radauswuchtmaschine)**
Optical spot scanning of the condition of a tyre of a vehicle wheel (with wheel balancing machine)
Balayage optique par points de la condition d'un pneu d'une roue de véhicule (avec machine d'équilibrage de roue)

(43) Veröffentlichungstag der Anmeldung: 16.03.2005
(73) Patentinhaber: Snap-on Equipment Srl a unico socio., 42015 Correggio (Reggio Emilia) (IT)
(72) Erfinder: Braghiroli, Francesco, 42100 Reggio Emilia (IT)
(74) Vertreter: Nöth, Heinz

(56) Entgegenhaltungen:
- EP-A- 0 547 365
- EP-A- 0 816 799
- EP-A- 0 884 574
- EP-A- 1 174 698
- US-A- 5 054 918

## Beschreibung

Die Erfindung betrifft ein Verfahren und eine Vorrichtung zum optischen Abtasten eines Luftreifens eines Fahrzeugrades, insbesondere Kraftfahrzeugrades, nach dem Oberbegriff - des Patentanspruches 1 und nach dem Oberbegriff des Patentanspruches 7.

Ein derartiges Verfahren und eine derartige Vorrichtung sind aus EP 0 816 799 A1 bekannt. Dabei wird der Luftreifen über seine gesamte Breit hin von einer Lichtquelle bestrahlt, so dass auf der Reifenoberfläche ein streifenförmiges beleuchtetes Profil gebildet wird, welches mit Hilfe einer Intensitätsanalyse zur Bestimmung geometrischer Eigenschaften der Reifenoberfläche ausgewertet wird. Pro Reifenumdrehung können 15 bis 25 beleuchtete Linien auf der Reifenoberfläche erzeugt werden. Hierbei werden insbesondere eine Überprüfung des Reifenprofils an der Lauffläche und eine Prüfung der Seitenflächen des Luftreifens durchgeführt.

Aus US-A-5,054,918 ist es bekannt, die Reifenlauffläche mit einem flachen Lichtstrahl zu bestrahlen und ein streifenförmiges Profil der Lauffläche abzubilden und mit einer Kamera aufzunehmen. Ferner ist es aus EP 1,174,698 A2 (= US 6,535,281 B2) bekannt, die Oberfläche eines Kraftfahrzeugrades mittels eines von einer Lichtquelle emittierten Lichtstrahls abzutasten und den zugeordneten reflektierten Strahl mit einem lichtempfindlichen Empfänger zu empfangen. Aus den Richtungen des emittierten Strahls und des reflektierten Strahls wird der Abstand der abgetasteten Stelle des Kraftfahrzeugrades zu einem Bezugsort gemessen. Die Lichtquelle und der Empfänger sind synchron bewegbar.

Aufgabe der Erfindung ist es, ein Verfahren und eine Vorrichtung der eingangs genannten Art zu schaffen, mit denen eine umfassende Ermittlung der Beschaffenheit des Luftreifens eines Kraftfahrzeugrades erreicht wird.

Diese Aufgabe wird beim Verfahren durch die Merkmale des Patentanspruches 1 und bei der Vorrichtung durch die Merkmale des Patentanspruches 7 gelöst.

Bei der Erfindung wird der Luftreifen des beispielsweise an einer Messwelle einer Radauswuchtmaschine drehbar gelagerten Fahrzeugrades mittels eines oder mehrerer Lichtstrahlen, insbesondere Laserstrahlen, abgetastet. Ein jeweiliger Lichtstrahl, insbesondere Laserstrahl, wird von einer an einer bestimmten Position befindlichen Lichtquelle aus, auf die Oberfläche des Luftreifens gerichtet, und ein jeweils zugeordneter reflektierter Strahl von einem lichtempfindlichen Empfänger, welcher sich ebenfalls auf einer bestimmten Position befindet, empfangen. Dabei werden aus den Richtungen des jeweils ausgesendeten Lichtstrahls und des zugeordneten reflektierten und empfangenen Lichtstrahls Abmessungen und Positionen des Luftreifens oder von Bestandteilen des Luftreifens ermittelt. Hierzu werden in Aufeinanderfolge mehrere Oberflächenstellen (Spots) des Luftreifens, der bei der Messung gedreht wird, abgetastet.

Dabei kann mittels einer Sensoreinrichtung, welche die Lichtquelle und den lichtempfindlichen Empfänger aufweist, die Lauffläche des Luftreifens abgetastet werden. Hierbei können eine unregelmäßige Reifenabnutzung oder die Reifenprofiltiefe an der Lauffläche sowie eine unzulässige Konizität der Lauffläche festgestellt werden. In Abhängigkeit von der Profiltiefe kann die voraussichtliche Nutzungsdauer des Reifens bis zu einem erforderlichen Reifenwechsel ermittelt werden. Außerdem können unregelmäßige Reifenabnutzungen, wie kreuzweis verlaufende Abriebsspuren oder flache Abriebsspuren auf Teilen der Lauffläche sowie eine Reifenschulterabnutzung und unregelmäßige Reifenschultern und dergleichen ermittelt werden.

Ferner können durch Abtastung der Reifenseitenwände Eindrückungen oder Ausbauchungen in diesen Reifenteilen festgestellt werden. Ferner lässt sich dabei auch ein unregelmäßiger Reifensitz im Felgenbett feststellen.

Zur Abtastung der beiden Reifenseitenwände und der Lauffläche kann eine Sensoreinrichtung, welche die Lichtquelle und den Empfänger auf einem gemeinsamen Träger aufweist, zum Einsatz kommen. Es ist jedoch auch möglich, drei derartige Sensoreinrichtungen vorzusehen, wobei jeweils eine Sensoreinrichtung der an der Innenseite und an der Außenseite des Fahrzeugrades liegenden Reifenseitenwand zugeordnet ist und eine Sensoreinrichtung der Abtastung der Lauffläche zugeordnet ist. Die Sensoreinrichtungen können in der Weise ausgebildet sein, wie die in der US-Patentschrift 6,535,281 B2 beschriebene Sensoreinrichtung. Diese bekannte Sensoreinrichtung tastet die Oberfläche des Kraftfahrzeugreifens punktförmig ab und wertet nach einem Triangulationsverfahren die entsprechenden Messwerte aus.

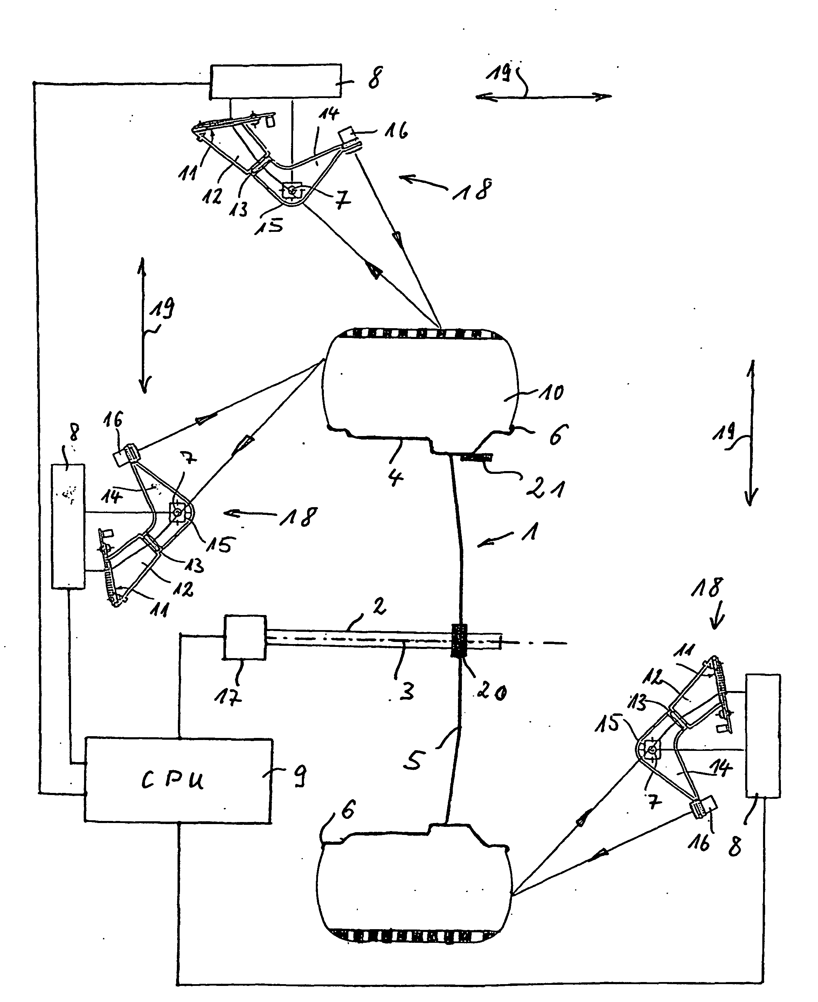

Anhand der Figur wird an einem Ausführungsbeispiel die Erfindung noch näher erläutert.

Die Figur zeigt in schematischer Darstellung ein Fahrzeugrad 1, welches in herkömmlicher Weise ein Scheibenrad 5 und eine am Umfang des Scheibenrades 5 befestigte Felge 4 aufweist. An der Felge 4 ist ein Luftreifen 10 gelagert. Reifenwülste sind in bekannter Weise an Felgenhörner 6 der Felge 4 abgestützt.

Das Fahrzeugrad 1, insbesondere Kraftfahrzeugrad ist in bekannter Weise an einer Messwelle 2 einer nicht näher dargestellten Radauswuchtmaschine in bekannter Weise in einer Befestigungsstelle 20 befestigt und um eine durch die Messwelle 2 definierte Drehachse, welche bei zentrierter Aufspannung mit einer Radachse 3 zusammenfällt, drehbar gelagert.

Auf diese Weise wird an der Radauswuchtmaschine eine ortsfeste Anordnung der Radachse 3 gewährleistet.

Mit einer oder mehreren Sensoreinrichtungen 18 können die Abmessungen und Positionen von Bestandteilen des Luftreifens 10 gemessen und rechnergestützt ermittelt werden. Jede Sensoreinrichtung beinhaltet eine Lichtquelle 16, welche vorzugsweise als Laser ausgebildet ist. Ferner beinhaltet jede Sensoreinrichtung 18 einen Empfänger 12, welcher als positionssensitives Empfangselement vorzugsweise einen CCD-Sensor aufweist. Die Lichtquelle 16 und der Empfänger 12 sind an einem Träger 14 befestigt. Der Träger 14 ist um eine Schwenkachse 17 schwenkbar gelagert. Ferner kann der Träger 14 linear (Doppelpfeile 19) oder auf einer vorgegebenen Führungsbahn gegenüber der Messwelle 2 und der Befestigung 20 des Fahrzeugrades 1 an der Messwelle 2 beweglich gelagert sein. Die Schwenkbewegung und die gegebenenfalls zusätzliche lineare oder geführte Bewegung kann mit Hilfe eines nicht näher dargestellten Antriebs, beispielsweise in Form eines oder mehrerer Schrittmotore bewirkt werden. Am Träger 14 ist ferner eine Empfängeroptik 13 vorgesehen. Die Empfängeroptik 13 und der CCD-Sensor 11 sind Bestandteile des Empfängers 12.

Die Lichtquelle 16 sendet einen Lichtstrahl auf die Oberfläche des Luftreifens 10 aus und bildet auf der Oberfläche einen Lichtfleck. Von dort wird das Licht in einem zugeordneten reflektierten Strahl reflektiert und gelangt durch die fokussierende Empfängeroptik 13 auf die Sensorelemente des CCD-Sensors 11. Der CCD-Sensor 11 kann mehrere lokale Maxima einer Beleuchtungsstärkefunktion getrennt voneinander erfassen. Die Richtung des reflektierten Strahls hängt von der Entfernung der auf dem Luftreifen 10 abgetasteten Stelle zur Lichtquelle 16 und zum Empfänger ab. In Abhängigkeit von diesem Abstand wird der reflektierte Strahl über die Empfängeroptik 13 auf eine bestimmte Stelle des CCD-Sensors 11 gerichtet und dann in ein positionsempfindliches oder positionsabhängiges Signal gewandelt. Dieses wird an eine Messelektronik 8 weitergeleitet, welche ferner mit einem Positionsgeber 15 verbunden ist. Der Positionsgeber 15 liefert an die Messelektronik 8 Positionssignale, welche den jeweiligen Positionen der Lichtquelle 16 und des CCD-Sensors 11 proportional sind. Die Lichtquelle 16 und der Empfänger 12 sind synchron miteinander bewegbar, da sie am gemeinsamen Träger 14 befestigt sind. Die Positionssignale sind bezogen auf eine an der nicht näher dargestellten Maschine vorhandene Referenzposition und damit bezogen auf die ortsfest an der Maschine gelagerte Messwelle 2 und die axiale Befestigungsstelle 20, an welcher das Fahrzeugrad 1 an der Messwelle 2 befestigt ist.

Die Messelektronik 8 erzeugt Messsignale, welche den Positionen der Oberflächenstellen (Spots) des Luftreifens 10 entsprechen, die von den von der Lichtquelle 16 ausgesendeten Lichtstrahlen abgetastet werden.

Mit Hilfe von drei Sensoreinrichtungen 18, welche der Innenseite (linke Sensoreinrichtung 18 in der Figur), der Außenseite (rechte Sensoreinrichtung 18 in der Figur) sowie der Lauffläche (oben liegende Sensoreinrichtung 18 in der Figur) des Luftreifens 10 zugeordnet sind, können alle Oberflächenpunkte des Luftreifens 10 erfasst werden.

Geeignete Sensoreinrichtungen 18, welche mit dem Triangulationsverfahren messen, sind aus EP 1,174,698 A2 (= US-Patent 6,535,281) bekannt. Es ist jedoch auch möglich, nur eine Sensoreinrichtung 18 zu verwenden, welche auf einem vorbestimmten Führungsweg sowohl an der Innenseite als auch an der Außenseite sowie an der Lauffläche des Luftreifens 10 in entsprechende Messpositionen gebracht werden kann.

Zur Erfassung aller Oberflächenpunkte des Fahrzeugrades 1 kann dieses drehbar um die Radachse 3 mit der Messwelle 2 gelagert sein. Die Messelektronik 8, welche die entsprechenden Messsignale liefert, kann Bestandteil der jeweiligen Sensoreinrichtung 18 sein. Es ist jedoch auch möglich, die Messelektronik 8 in eine rechnergestützt arbeitende Auswerteeinrichtung 9 zu integrieren. Aufgrund der beschriebenen Messanordnung können rechnergestützt durch die Auswerteeinrichtung 9 Abmessungen und Positionen von Bestandteilen des Luftreifens 10 sowie Eigenschaften dieser Bestandteile bestimmt und ausgewertet werden.

Die jeweilige Drehwinkelposition des Luftreifens 10 kann durch einen in herkömmliche Weise mit der Messwelle 2 der Radauswuchtmaschine verbundenen Drehwinkelgeber 18 erfolgen. Dieser liefert Drehwinkelinkremente an die Auswerteeinrichtung 9 bei der Drehung des Kraftfahrzeugrades 1. Hierdurch erreicht man Positionsangaben zu den jeweiligen Drehwinkelpositionen der von der jeweiligen Sensoreinrichtung 18 abgetasteten Oberflächenstelle der Reifenoberfläche. Als Drehwinkelbezug kann ein Reifenfüllventil 21, dessen Drehwinkellage am Fahrzeugrad 1 durch die die Außenseite des Fahrzeugrades abtastende Sensoreinrichtung 18 erfasst wird, dienen.

Die der Innenseite des Fahrzeugrades zugeordnete Sensoreinrichtung 18 kann am Maschinengehäuse der Radauswuchtmaschine, vorzugsweise unterhalb der Messwelle 2 gelagert sein. Die der Abtastung der Lauffläche des Luftreifens 10 zugeordnete Sensoreinrichtung kann in der Nähe einer Schwenkachse einer Radschutzhaube, welche beim Messlauf über das sich drehende Rad in bekannter Weise geschwenkt wird, sich befinden. Die der Außenseite des Fahrzeugrades 1 zugeordnete Sensoreinrichtung 18 kann an der schwenkbaren Radschutzhaube angeordnet oder mit dieser verbunden sein.

Wie aus der Figur zu ersehen ist, können mit den drei Sensoreinrichtungen die Seitenwände, d.h. die innenliegende und die außenliegende Seitenwand des Luftreifens 10 sowie die Lauffläche des Luftreifens 10 abgetastet werden. Auch der Bereich der Reifenschultern kann durch die in der Figur dargestellte Messanordnung erfasst werden. Wie schon erläutert, können dabei drehwinkelbezogen Abriebsstellen, Unebenheiten und durch Abrieb, Verschleiß und dergleichen erzeugte Defekte am Reifen festgestellt werden. Man erreicht auf diese Weise eine umfassende Qualitätsprüfung des Reifens.

Die Erfindung ist bei Fahrzeugrädern jeglicher Art, beispielsweise Kraftfahrzeugrädern, Motorradrädern, Nutzfahrzeugrädern u. dgl. anwendbar.

## Patentansprüche

1. Verfahren zum optischen Abtasten eines Luftreifens eines Fahrzeugrades, bei dem das Fahrzeugrad um eine feststehende Achse gedreht wird, Lichtstrahlen aus einer bestimmten Position auf die Oberfläche des Luftreifens gerichtet werden und zugeordnete reflektierte Strahlen an einer bestimmten Position empfangen werden und entsprechende Drehwinkel-bezogene Signale zur Ermittlung von Abmessungen und Positionen des Luftreifens oder von Bestandteilen des Luftreifens ausgewertet werden, **dadurch gekennzeichnet, dass** die Oberfläche des Luftreifens mit in aufeinander folgenden punktförmigen Lichtflecken auf die Reifenoberfläche auftreffenden Lichtstrahlen schrittweise abgetastet wird und die dazugehörige Drehwinkelpositionen des Fahrzeugrades gemessen werden und dass mittel Triangulation die Abstände der jeweiligen punktförmigen Lichtflecke zu einer Bezugsposition ermittelt und daraus die Abmessungen und Positionen des Luftreifens oder von Bestandteilen des Luftreifens ermittelt werden.

2. Verfahren nach Anspruch 1,
**dadurch gekennzeichnet, dass** die Lauffläche des Luftreifens abgetastet wird.

3. Verfahren nach Anspruch 1 oder 2,
**dadurch gekennzeichnet, dass** die Profiltiefe oder eine unregelmäßige Reifenabnutzung bei der Abtastung der Lauffläche ermittelt wird.

4. Verfahren nach einem der Ansprüche 1 bis 3,
**dadurch gekennzeichnet, dass** zur Bestimmung einer unzulässigen Konizität die Lauffläche des Luftreifens abgetastet wird.

5. Verfahren nach Anspruch 1,
**dadurch gekennzeichnet, dass** eine Reifenseitenwand oder beide Reifenseitenwände abgetastet wird bzw. werden.

6. Verfahren nach Anspruch 1 oder 5,
**dadurch gekennzeichnet, dass** der Reifensitz an der Radfelge und/oder Eindrückungen und/oder Ausbauchungen an einer oder beiden Reifenseitenwänden erfasst wird bzw. werden.

7. Vorrichtung zum optischen Abtasten eines Luftreifens eines Fahrzeugrades (1), welches an einer Messwelle (2) einer Radauswuchtmaschine drehbar gelagert ist, mit wenigstens einer Lichtquelle (16), welche auf die Oberfläche des Luftreifens (10) gerichtete Lichtstrahlen aussendet, und einem Empfänger (11, 12, 13), welcher von der Oberfläche des Luftreifens reflektierte Strahlen empfängt und zu bestimmten Drehwinkeln des Fahrzeugrades gehörige Signale erzeugt, und mit einer Rechner gestützten Auswerteeinrichtung (9), welche aus den vom Empfänger (11, 12, 13) empfangenen Signalen Abmessungen und Positionen des Luftreifens oder von Bestandteilen des Luftreifens ermittelt, **dadurch gekennzeichnet, dass** die Lichtquelle (16) Lichtstrahlen aussendet, welche auf der Reifenoberfläche punktförmige Lichtflecke bilden, dass die Lichtquelle (16) und der Empfänger (11, 12, 13) für eine Messung der Abstände aufeinander folgender punktförmiger Lichtflecke auf der Reifenoberfläche von einer Referenzposition mittels Triangulation schrittweise und synchron zu bewegen sind und dass an die Messwelle (2) ein Drehwinkelgeber (17) gekoppelt ist, welcher für die Drehwinkelzuordnung der abstandsproportionalen Signale des Empfängers (11, 12, 13) an die Auswerteeinrichtung (9) angeschlossen ist.

8. Vorrichtung nach Anspruch 7,
**dadurch gekennzeichnet, dass** drei Sensoreinrichtungen (18), von denen jede die Lichtquelle (16) und den Empfänger (11, 12, 13) aufweist, an Bauteilen der Radauswuchtmaschine beweglich angeordnet sind, wobei eine Sensoreinrichtung (18) zum Abtasten der Reifenlauffläche und zwei Sensoreinrichtungen (18) zum Abtasten der Reifenseitenwände an der Radinnenseite und der Radaußenseite angeordnet sind.

## Claims

1. A method of optically scanning a pneumatic tyre of a vehicle wheel, in which the vehicle wheel is rotated about a stationary axis, light beams are directed from a given position on to the surface of the pneumatic tyre and associated reflected beams are received at a given position and corresponding rotary angle-related signals are evaluated to ascertain dimensions and positions of the pneumatic tyre or constituent parts of the pneumatic tyre, **characterised in that** the surface of the pneumatic tyre is scanned step-wise with light beams impinging on the tyre surface in successive point-form light spots and the associated rotary angle positions of the vehicle wheel are measured and that by means of triangulation the spacings of the respective point-form light spots relative to a reference position are ascertained and ascertained therefrom are the dimensions and positions of the pneumatic tyre or constituent parts of the pneumatic tyre.

2. A method according to claim 1 **characterised in that** the tread surface of the pneumatic tyre is scanned.

3. A method according to claim 1 or claim 2 **characterised in that** the profile depth or irregular tyre wear is ascertained when scanning the tread surface.

4. A method according to one of claims 1 to 3 **characterised in that** the tread surface of the pneumatic tyre is scanned to determine inadmissible conicity.

5. A method according to claim 1 **characterised in that** a tyre side wall or both tyre walls is or are scanned.

6. A method according to claim 1 or claim 5 **characterised in that** the tyre fit to the wheel rim and/or depressions and/or bulges at one or both tyre side walls is or are detected.

7. Apparatus for optically scanning a pneumatic tyre of a vehicle wheel (1) which is rotatably mounted on a measuring shaft (2) of a wheel balancing machine, comprising at least one light source (16) which emits light beams directed on to the surface of the pneumatic tyre (10), and a receiver (11, 12, 13) which receives beams reflected from the surface of the pneumatic tyre and produces signals associated with given rotary angles of the vehicle wheel, and a computer-aided evaluation device (9) which from the signals received by the receiver (11, 12, 13) ascertains dimensions and positions of the pneumatic tyre or constituent parts of the pneumatic tyre **characterised in that** the light source (16) emits light beams which form on the tyre surface point-form light spots, that the light source (16) and the receiver (11, 12, 13) are to be moved step-wise and synchronously for measurement of the spacings of successive point-form light spots on the tyre surface from a reference position by means of triangulation and that coupled to the measuring shaft (2) is a rotary angle sensor (17) which is connected to the evaluation device (9) for rotary angle association of the spacing-proportional signals of the receiver (11, 12, 13).

8. Apparatus according to claim 7 **characterised in that** three sensor devices (18), each of which has the light source (16) and the receiver (11, 12, 13), are arranged movably on components of the wheel balancing machine, wherein a sensor device (18) for scanning the tyre tread surface and two sensor devices (18) for scanning the tyre side walls are arranged at the inside of the wheel and the outside of the wheel.

## Revendications

1. Procédé pour balayer optiquement un pneu d'une roue de véhicule, d'après lequel la roue de véhicule tourne autour d'un essieu fixe,
des rayons lumineux sont dirigés depuis une position donnée sur la surface du pneu et des rayons réfléchis associés sont reçus à une position définie et
des signaux correspondants qui font référence à un angle de rotation sont exploités pour établir des dimensions et des positions concernant le pneu ou des composants du pneu
**caractérisé en ce que**
- la surface du pneu est balayée progressivement à l'aide de rayons lumineux qui atteignent la surface du pneu en taches lumineuses ponctuelles et successives et les positions correspondantes d'angle de rotation de la roue de véhicule sont mesurées et
- les écarts de chacune des taches lumineuses ponctuelles par rapport à une position de référence sont établis par triangulation et les dimensions et les positions concernant le pneu ou des éléments du pneu sont établies à partir de ces écarts.

2. Procédé selon la revendication 1, **caractérisé en ce que** la bande de roulement du pneu est balayée.

3. Procédé selon la revendication 1 ou 2, **caractérisé en ce que** la profondeur de sculpture ou une usure irrégulière du pneu est déterminée lorsque la bande de roulement est balayée.

4. Procédé selon l'une des revendications 1 à 3, **caractérisé en ce que** la bande de roulement du pneu est balayée pour déterminer si la bande de roulement a une conicité inadmissible.

5. Procédé selon la revendication 1, **caractérisé en ce qu'**une paroi latérale de pneu est balayée ou les deux parois latérales du pneu sont balayées.

6. Procédé selon la revendication 1 ou 5, **caractérisé en ce qu'**on détecte le plat sur la jante de roue et/ou les empreintes et/ou les convexités sur une ou sur les deux parois latérales de pneu.

7. Dispositif pour balayer optiquement un pneu d'une roue de véhicule (1), lequel est monté de façon à pouvoir tourner sur un arbre de mesure (2) d'un banc d'équilibrage de roue et comporte
- au moins une source lumineuse (16) qui émet des rayons lumineux dirigés sur la surface du pneu (10) et un récepteur (11, 12, 13) qui reçoit des rayons réfléchis par la surface du pneu et qui produit des signaux correspondant à des angles de rotation déterminés de la roue de véhicule et
- une installation d'exploitation (9) assistée par ordinateur qui établit à partir des signaux reçus par le récepteur (11, 12, 13) les dimensions et les positions concernant le pneu ou des composants du pneu,
**caractérisé en ce que**
- la source lumineuse (16) émet des rayons lumineux qui forment des taches lumineuses ponctuelles à la surface du pneu,
- la source lumineuse (16) et le récepteur (11, 12, 13) doivent se mouvoir progressivement en synchronie pour mesurer par triangulation les écarts des points lumineux ponctuels successifs à la surface du pneu par rapport à une position de référence et
- à l'arbre de mesure (2) est couplé un générateur d'angle de rotation (17) raccordé à l'installation d'exploitation (9) pour associer l'angle de rotation des signaux proportionnels à l'écart et provenant du récepteur (11, 12, 13).

8. Dispositif selon la revendication 7, **caractérisé en ce que** trois installations de détection (18) dont chacune est munie de la source lumineuse (16) et du récepteur (11, 12, 13) sont mobiles sur des composants du banc d'équilibrage de roue, une installation de détection (18) destinée à balayer la bande de roulement et deux installations de détection (18) destinées à balayer les parois latérales de pneu étant placées du côté intérieur et du côté extérieur de la roue.
